# EUROPEAN PATENT APPLICATION

(11) **EP 2 224 310 A1**
(43) Date of publication of application: **01.09.2010**
(21) Application number: 10000886.1
(22) Date of filing: 28.01.2010
(51) Int. Cl.: G06F 1/32

(54) **Touchpad mouse wakeup circuit arrangement**

(30) Priority: 26.02.2009 TW 98202897
(71) Applicant: Chance Steel Mold Co., Ltd., Tucheng City T'ai pei (TW)
(72) Inventor: Yen, Hung-Che, Ta-Tung District, Taipei City (TW)
(74) Representative: Glawe, Delfs, Moll

(57) **Abstract**

A touchpad mouse wakeup circuit arrangement is disclosed to include a control circuit installed in a touchpad mouse and consisting of a microprocessor, a touch panel, a vibration sensor and a power supply module. The vibration sensor detects a micro vibration and provides a voltage signal to the microprocessor when a user touches the housing of the touchpad mouse, causing the microprocessor to output a triggering signal to wakeup the touchpad mouse and to start the power supply module.

## Description

### BACKGROUND OF THE INVENTION

This application claims the priority benefit of Taiwan patent application number 098202897, filed on February 26, 2009.

### 1. Field of the Invention:

The present invention relates to touchpad mice and more particularly, to a touchpad mouse wakeup circuit arrangement, which produces a triggering signal to wakeup the touchpad mouse and to start a power supply module to provide the necessary working power supply when a person touches or clicks the housing of the touchpad mouse, saving power consumption.

### 2. Description of the Related Art:

Regular personal computers and notebook computers are commonly equipped with a keyboard and a mouse for signal input. When compared to a keyboard, a mouse is more convenient for moving a cursor on a screen. In a computer operation system, the mouse is a requisite equipment. Many application programs must be operated through a mouse. A mouse facilitates the operation of a computer system.

Further, conventional mice include mechanical mice and optical mice. A mechanical mouse uses a trackball for rolling by the user. The trackball of a mechanical mouse consists of a ball held by a socket and sensors to detect a rotation of the ball in X-axis and Y-axis direction and to send the detected result to the computer. An optical mouse uses light-emitting diodes and photodiodes to detect movement relative to the underlying surface. Modern surface-independent optical mice work by using an optoelectronic sensor to take successive images of the surface on which the mouse operates. An advanced mouse has image-processing chips embedded therein to detect relative motion on a wide variety of surfaces, translating the movement of the mouse into the movement of the pointer and eliminating the need for a special mouse-pad. Nowadays, touchpad is used in a computer mouse. A touchpad consists of specialized surface that can translate the motion and position of a user's fingers to a relative position on screen. When a touchpad is used with a gesture recognition software and a word bank, a touchpad is practical for browsing and searching songs, dialing a telephone number, sending an e-mail message, or operating other functions, providing a human-friendly environment.

Further, wireless mice have been intensively used in personal computers as well as notebook computers to substitute for conventional wired mice. A wireless mouse eliminates a cable connection. A wireless mouse has a wireless transmitter mounted therein for transmitting a wireless signal to a wireless receiver installed in the computer, and is equipped with a battery that provides the wireless mouse with the necessary working voltage. However, a wireless mouse keeps consuming power supply from the equipped battery during the time period the user does no work. Thus, the battery of a wireless mouse will be used up soon. When power low, the battery must be recharged, or replaced with a new battery. In order to save power consumption, a time control circuit is created for use in a mouse to save power consumption. When the user stops input, the time control circuit starts to count time and then switches the mouse into the standby mode after a predetermined length of time within which no any operation signal is detected. When the mouse is moved or operated, a wakeup signal is created to wake up the mouse for operation. However, the mouse keeps consuming the power supply before entering the standby mode or during automatic displacement sensing or operation. Further, when the user operates the mouse during the standby mode, the mouse cannot make a response on the real time and will be wakened up after a time delay, lowering the operation efficiency and effects.

Therefore, it is desirable to provide a measure that eliminates the aforesaid problems.

### SUMMARY OF THE INVENTION

The present invention has been accomplished under the circumstances in view. It is one object of the present invention to provide a touchpad mouse wakeup circuit arrangement, which makes the touch control effective only when the user touches or clicks the housing of the touchpad mouse during a touch operation to touch the touch panel of the touchpad mouse. When the user touches or clicks the housing of the touchpad mouse, a vibration sensor of an induction loop of the touchpad mouse wakeup circuit arrangement senses a micro vibration and converts the micro vibration into a voltage signal for causing a microprocessor to output a triggering signal to wake up the touchpad mouse and to start a power supply module that provides the touchpad mouse with the necessary working voltage. If the user does not touch or click the housing of the touchpad mouse, the touch function is inactive, and the touchpad mouse is kept in the standby mode.

Further, if the user does not touch or click the housing of the touchpad mouse when the touchpad mouse is in the standby mode, the vibration sensor of the induction loop in the touchpad mouse detects no signal and the power supply module is kept off, avoiding an erroneous operation.

Further, when the user touches or clicks the housing of the touchpad mouse, the induction loop wakes up the touchpad mouse and synchronously starts the power supply module to provide the necessary working voltage for operation. Thus, the touchpad mouse wakeup circuit module saves power consumption, extends the operating time, makes a synchronous response, and enhances the functioning of the touchpad mouse.

### BRIEF DESCRIPTION OF THE DRAWINGS

FIG. 1 is a circuit block diagram of a touchpad mouse wakeup circuit arrangement in accordance with the present invention.

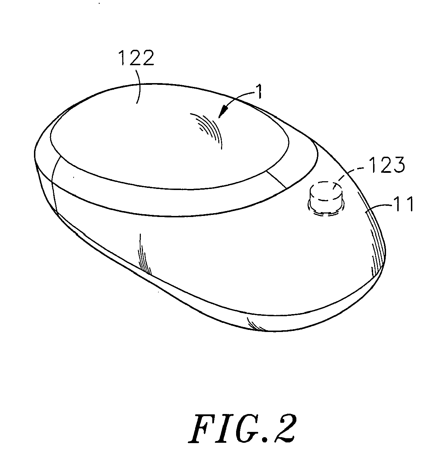

FIG. 2 is an elevational view of a touchpad mouse constructed in accordance with the present invention.

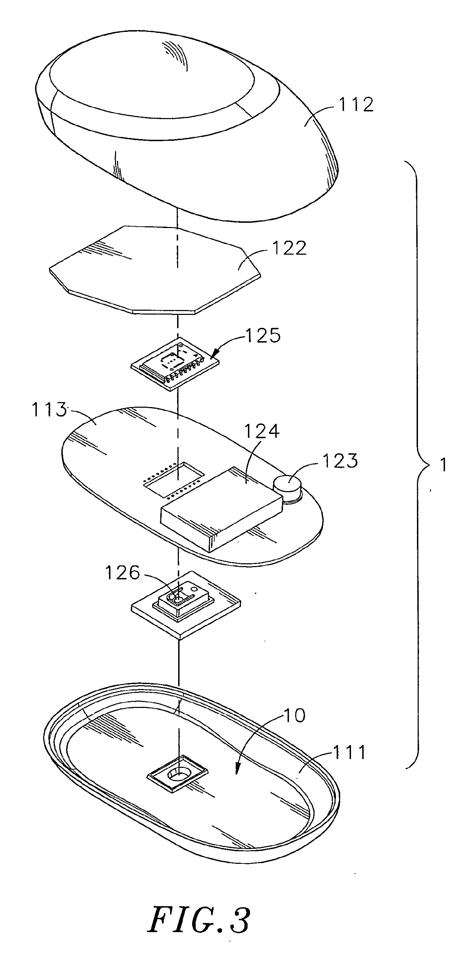

FIG. 3 is an exploded view of the touchpad mouse shown in FIG. 2.

### DETAILED DESCRIPTION OF THE PREFERRED EMBODIMENT

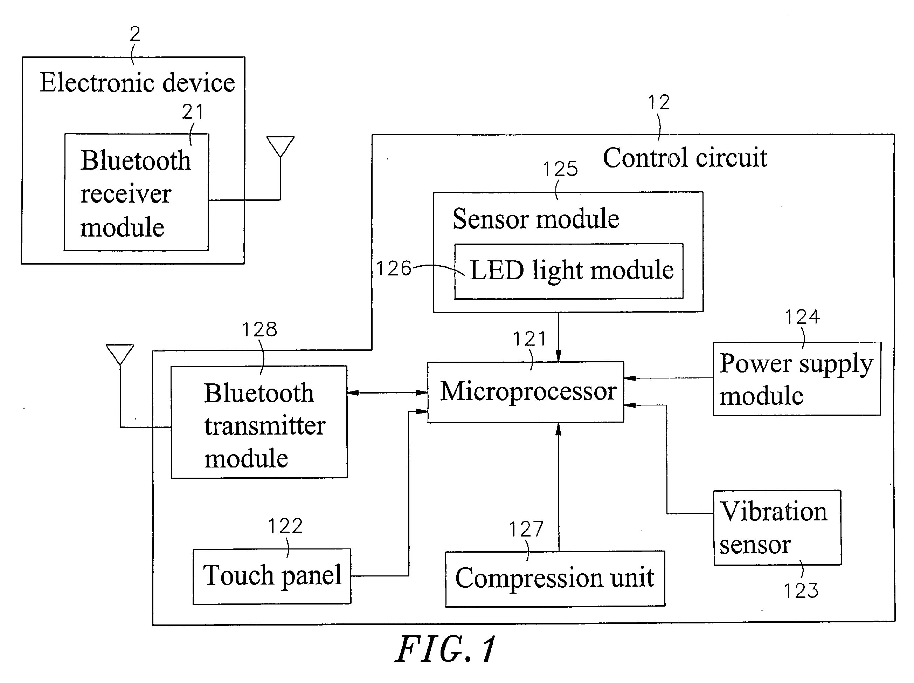

Referring to FIGS. 1∼3, a touchpad mouse **1** is shown comprising a housing **11** and a control circuit **12** mounted inside the housing **11.**

The housing **11** comprises a bottom cover shell **111,** a top cover shell **112** covering the bottom cover shell **111,** an accommodation chamber **10** defined in between the bottom cover shell **111** and the top cover shell **112** and at least one circuit board **113** accommodated in the accommodation chamber **10.** The circuit board **113** has electronic components and the control circuit **12** arranged thereon.

The control circuit **12** comprises a microprocessor **121,** a touch panel **122,** a vibration sensor **123** and a power supply module **124.** The microprocessor **121** is electrically connected with the touch panel **122,** the vibration sensor **123** and the power supply module **124.** The vibration sensor **123** can be a piezoelectric vibration sensor, mechanical vibration sensor or G-sensor adapted to provide a vibration sensing, displacement sensing, motion sensing or tilt sensing function. Further, the microprocessor **121** has electrically connected thereto a sensor module **125**. The aforesaid components are assembled, forming the touchpad mouse **1.**

During the use of the touchpad mouse **1,** the control circuit **12** forms an induction loop in the housing

**11.** When a user touches the surface of the touch panel **122** to initiate a touch function, the user needs to touch the housing **11** with the hand or to click the housing **11** with a finger, thereby producing a micro vibration or displacement to trigger the induction loop, thus, the touch function becomes effective. Further, the vibration sensor **123** converts the amount of displacement into a voltage signal and transmits the voltage signal to the microprocessor **121** for calculation so that the microprocessor **121** outputs a triggering signal to wake up the stand-by touchpad mouse **1** and to start the power supply module **124** to provide the necessary working power supply. In other words, if the human body does not touch the housing **11** of the touchpad mouse **1,** the touch control function of the touch panel **122** is inactive, the microprocessor **121** does not output any triggering signal, and the touchpad mouse **1** is kept in the standby mode.

The aforesaid sensor module **125** of the control circuit **12** that is electrically connected to the microprocessor **121** can be an infrared sensor module, CMOS (complementary metal-oxide semiconductor) image sensor or CCD (charge-coupled device) image sensor. Further, the sensor module **125** works with a LED light module **126** for calculating the amount of displacement of the touchpad mouse **1** on a flat surface by means of measuring the pulse wave of the light emitted by said light-emitting diode means and reflected by said flat surface. Further, when the user touches the touch panel **122** that is exposed to the outside of the housing **11,** a corresponding analog signal is produced and transmitted to the microprocessor **121** for conversion into a corresponding digital signal. This digital signal is then sent by the microprocessor **121** to a compression unit **127** for compression so that the compressed digital signal can be then transmitted to a Bluetooth receiver module **21** of an external electronic device **2** by a Bluetooth transmitter module **128** of the touchpad mouse **1** for causing the external electronic device **2** to execute the corresponding command or program. The displacement sensing and calculation operations of the sensor module **125** and the touch control function of the touch panel **122** are of the known art and not within the scope of the present invention, and therefore no further detailed description in this regards is necessary.

As stated above, the main feature of the present invention is the arrangement of the circuit board **113** that carries the control circuit **12** and the related electronic components. The microprocessor **121** of the control circuit **12** is electrically connected with the touch panel **122,** the vibration sensor **123** and the power supply module **124.** When a person touches the touch panel **122** to run a touch function, the user needs to touch or click the housing **11** to create a micro vibration displacement, triggering the induction loop. Further, the vibration sensor **123** converts the amount of micro vibration displacement into a corresponding voltage signal and transmits this voltage signal to the microprocessor **121** for causing the microprocessor **121** to output a triggering signal to wake up the touchpad mouse **1** and to start the power supply module **124.** This touchpad mouse wakeup arrangement avoids the touchpad mouse **1** from wasting power supply before entering the standby mode or during automatic displacement sensing or operation, thereby extending the effective operating time of the touchpad mouse **1.** Further, this arrangement makes a response synchronously upon touch of the housing **11** by the user, avoiding wakeup delay.

Further, if the housing **11** is not touched or clicked by a human body during the standby mode of the touchpad mouse **1,** no any micro vibration displacement is created to trigger the induction loop. At this time, the vibration sensor **123** detects no signal to wake up the touchpad mouse **1,** and the power supply module **24** is off. Therefore, the invention avoids an erroneous operation, saves power consumption, extends the operating time, makes a synchronous response, and enhances the functioning of the touchpad mouse **1.**

Although a particular embodiment of the invention has been described in detail for purposes of illustration, various modifications and enhancements may be made without departing from the spirit and scope of the invention. Accordingly, the invention is not to be limited except as by the appended claims.

**List of reference symbols**

| Applicant : CHANCE STEEL MOLD CO., LTD. | |
|---|---|
| Patent Title : TOUCHPAD MOUSE WAKEUP CIRCUIT ARRANGEMENT | |
| 1- touchpad mouse | 122- touch panel |
| 10- accommodation chamber | 123- vibration sensor |
| 11- housing | 124- power supply module |
| 111- bottom cover shell | 125- sensor module |
| 112- top cover shell | 126- LED light module |
| 113- circuit board | 127- compression unit |
| 12- control circuit | 128- Bluetooth transmitter module |
| 121- microprocessor | |
| | |
| | |
| 2- electronic device | |
| 21- Bluetooth receiver module | |
| | |

## Claims

1. A touchpad mouse (1) wakeup circuit arrangement, comprising:
a housing(11) defining therein an accommodation chamber (10);
a circuit board (113) accommodated in said accommodation chamber (10); and
a control circuit (12) installed in said circuit board (113), said control circuit (12) comprising a microprocessor (121), a touch panel (122) exposed to the outside of said housing(11) and electrically connected to said microprocessor (121), a vibration sensor (123) electrically connected to said microprocessor (121) and a power supply module (124) electrically connected to said microprocessor(121);
wherein said control circuit (12) forms an induction loop such that when a user touches said housing (11) to create a micro vibration, said vibration sensor (123) detects said micro vibration and causes said induction loop to produce a voltage signal to said microprocessor (121) for enabling said microprocessor (121) to output a triggering signal to wakeup the touchpad mouse (1) and to start said power supply module (124).

2. The touchpad mouse (1) wakeup circuit arrangement as claimed in claim 1, wherein said vibration sensor (123) is selected from a group consisting of piezoelectric sensor, mechanical vibration sensor (123) and G-sensor.

3. The touchpad mouse (1) wakeup circuit arrangement as claimed in claim 1, wherein said control circuit (12) further comprises a sensor module (125) electrically connected to said microprocessor (121) and adapted to sensing displacement of the touchpad mouse (1) on a flat surface, a compression unit (127) electrically connected to said microprocessor (121) and adapted to compress a digital signal converted by said microprocessor (121) from an analog signal produced by said touch panel (122) upon touch of a person, a Bluetooth transmitter module (128) electrically connected to said microprocessor (121) and controllable by said microprocessor (121) to transmit compressed digital signal obtained from said compression unit (127) to a Bluetooth receiver of an external electronic device (2).

4. The touchpad mouse (1) wakeup circuit arrangement as claimed in claim 3, wherein said sensor module (125) is an infrared sensor module (125) working with light-emitting diode means to calculate the amount of displacement of the touchpad mouse (1) on a flat surface by means of measuring the pulse wave of the light emitted by said light-emitting diode means and reflected by said flat surface.
